(19) Europäisches Patentamt
European Patent Office
Office européen des brevets

(11) EP 3 779 356 A1

(12) EUROPEAN PATENT APPLICATION
published in accordance with Art. 153(4) EPC

(43) Date of publication:
17.02.2021 Bulletin 2021/07

(51) Int Cl.:
G01B 11/26 (2006.01)      G01B 11/24 (2006.01)
G06T 7/521 (2017.01)      G06T 7/70 (2017.01)

(21) Application number: 19775154.8

(22) Date of filing: 25.03.2019

(86) International application number:
PCT/JP2019/012299

(87) International publication number:
WO 2019/188865 (03.10.2019 Gazette 2019/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 26.03.2018 JP 2018057835

(71) Applicants:
• Equos Research Co., Ltd.
Tokyo 101-0021 (JP)
• Keio University
Tokyo 108-8345 (JP)

(72) Inventors:
• WATANABE, Yutaka
Tokyo 101-0021 (JP)
• OKADA, Masaki
Tokyo 101-0021 (JP)
• KUNO, Kazuhiro
Tokyo 101-0021 (JP)
• TAKAHASHI, Masaki
Yokohama-shi Kanagawa 223-8522 (JP)
• YOROZU, Ayanori
Yokohama-shi Kanagawa 223-8522 (JP)

(74) Representative: TBK
Bavariaring 4-6
80336 München (DE)

(54) **BODY ORIENTATION ESTIMATION DEVICE AND BODY ORIENTATION ESTIMATION PROGRAM**

(57)      [Problem]
Provided are a body orientation estimation device and body orientation estimation program that make it possible to detect the orientation of a target even in an environment with various changes in the positional relation between a sensor and the target.
[Solution]
From distance measurement data (MP) obtained by a distance measurement sensor (16), according to a moving body (1) calculates approximate ellipses (C) and quadratic functions (Qxy, Qyx) along an xy-axis and yx-axis are calculated. An approximate ellipse (C) close to the shoulder width (W1) and thickness (W2) of a user (H) is selected, and quadratic functions (Qxy, Qyx) having the smallest approximation error to the distance measurement data (MP) are selected. Thus, the position and orientation of the user (H) are estimated from the selected approximate curves. That is, if an approximate curve based on one shape or coordinate system does not match the user (H), the position and orientation of the user (H) are estimated from an approximate curve based on another shape or coordinate system. Therefore, even if the positional relation between the distance measurement sensor (16) and user (H) changes variously, the position and orientation of the user (H) can be detected.

Fig. 3

**Description**

[Technical Field]

The present invention relates to a body orientation estimation device and a body orientation estimation program capable of detecting an orientation of a target even under an environment that a positional relation between a sensor and the target changes variously.

[Background Art]

In a detection device of face orientation shown in Patent Literature 1, a distance to a head 4 is respectively detected by a plurality of distance sensors 11a to 11e arranged horizontally on a head rest 3 and an approximate curve 5 is prepared based on this head distance. A part of the prepared approximate curve 5 is approximated based on an ellipse 6 and a yaw angle of the head 4 is estimated based on a long axis of the ellipse 6.

Further, according to an estimation device of a human body orientation shown in Patent Literature 2, a distance sensor 50 is provided, the target person is approximated by an ellipse in accordance with the measurement result of the distance sensor 50, and the position of the center of gravity thereof is calculated. The estimation device tracks change of the position of the center of gravity and calculates movement direction of the target, thereby estimating this movement direction as an orientation of the target. Similarly, also in a positional detection device shown in Patent Literature 3, the device measures the target by a plurality of distance sensors 11 to 14, approximates an outline of the target by an ellipse from a point group of measured distances, tracks change of the center of gravity, calculates a movement direction of the target and estimates this as an orientation of the target.

[Citation List]

[Patent Literature]

[Patent Literature 1] Japanese Laid-Open Patent Publication No. 2016-175509
[Patent Literature 2] Japanese Laid-Open Patent Publication No. 2011-081634
[Patent Literature 3] Japanese Laid-Open Patent Publication No. 2010-169521

[Summary of the Invention]

[Problems to be Solved by the Invention]

As shown in PTL 1, in case of orientation of the head 4 leaning on the head rest 3, a positional relation between each sensors 11a to 11e and the head 4 is almost fixed. Therefore, it is possible to estimate the yaw angle of the head 4 by the ellipse calculated on the basis of the distance to the head 4.

However, as shown in PL2 and PL3, in an environment in which the positional relation between the sensor and the target (body) changes in various ways, depending on the positional relation between the sensor and the target, the way of obtaining the distance measurement data changes, and the approximate curve may not fit the target well in some cases. In such a case, the orientation of the target cannot be detected.

The present invention has been made to solve the above-mentioned problems, and an object thereof is to provide a body orientation estimation device and a body orientation estimation program capable of detecting the orientation of a target even under an environment that the positional relation between a sensor and the target changes variously.

[Means for Solving the Problems]

To achieve the object, the body orientation estimation device according to the present invention includes a distance measurement unit for measuring a target, a quadratic function calculation unit for calculating quadratic functions approximated based on a plurality of distance measurement data measured by the distance measurement unit based on a plurality of coordinate systems, a quadratic function selection unit for selecting the quadratic function having the smallest approximation error to the plurality of the distance measurement data among the quadratic functions calculated by the quadratic function calculation unit, and an orientation estimation unit for estimating an orientation of the target based on the quadratic function selected by the quadratic function selection unit.

A body direction estimation program according to the present invention allows a computer to execute a distance measurement obtainment function for obtaining distance measurement data measuring a target, a quadratic function calculation function for calculating quadratic functions approximated based on a plurality of the distance measurement data obtained by the distance measurement obtainment function based on a plurality of coordinate systems, a quadratic function selection function for selecting the quadratic function having the smallest approximation error to the plurality of the distance measurement data among a plurality of quadratic functions calculated by the quadratic function calculation function, and an orientation estimation function for estimating an orientation of the target based on the quadratic function selected by the quadratic function selection function.

[Effects of the Invention]

According to the body orientation estimation device and the body orientation estimation program of the present invention, the quadratic functions approximated based on a plurality of distance measurement data obtained by distance measurement of the target are calculated based on a plurality of coordinate systems. Among the plurality of calculated quadratic functions, the quadratic function having the smallest approximation error to the plurality of the distance measurement data is selected, and the orientation of the target is estimated based on the selected quadratic function. That is, in a case where the quadratic function calculated based on one coordinate system cannot fit the target well, the orientation of the target is estimated based on the quadratic function calculated based on the other coordinate system. Therefore, even under a circumstance that the positional relation between the distance measurement unit (sensor) and the target changes variously, there is an effect that the orientation of the target can be detected.

[Brief Description of the Drawings]

Fig. 1 is an external view of a moving body.
Fig. 2 is a block diagram indicating an electric configuration of the moving body.
Fig. 3 is a flowchart of the moving body.
Fig. 4 is a view indicating a calculation of an approximate ellipse of a user.
Fig. 5(a) is a view indicating the case where approximate ellipsis having different sizes are calculated due to instantaneous variations in the distance measurement data.
Fig. 5(b) shows the shoulder width and thickness of the body of the user and the long and short axes of the approximate ellipse.
Fig. 6(a) is a view indicating calculation of two types of quadratic functions.
Fig. 6(b) is a view indicating the case where no vertex of the quadratic function exists between distance measurement data at both ends.
Fig. 7(a) is a view indicating the case where the vertex of quadratic function exists between cluster edges and one of the cluster edges exists outside the vertex and is distant from the vertex.
Fig.7(b) is a view indicating the case where the vertex of quadratic function exists between the cluster edges and one of the cluster edges exists outside the vertex and is close to the vertex T.

[Description of the Preferred embodiment]

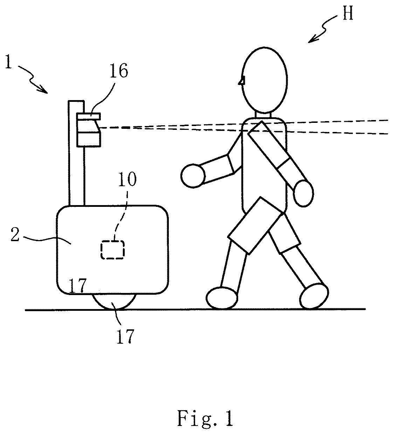

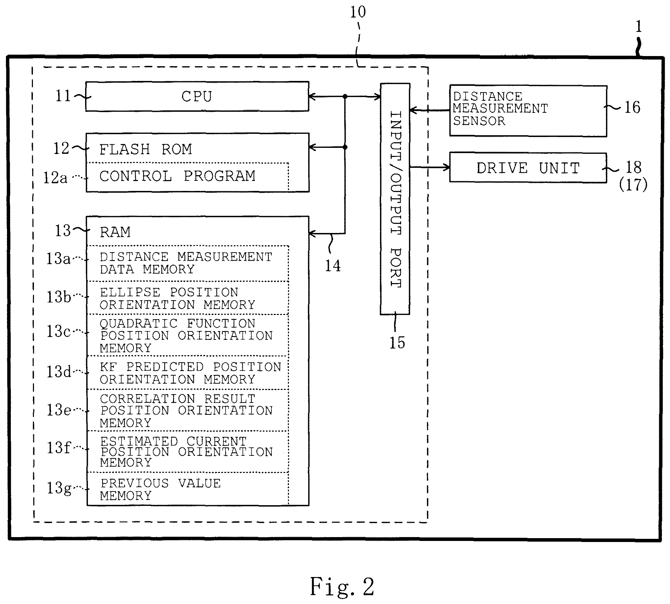

Hereinafter, preferred embodiments of the present invention will be described with reference to the accompanying drawings. First, with reference to Fig. 1, a configuration of the moving body 1 according to the present embodiment will be described. Fig. 1 is an external view of the moving body 1. The moving body 1 functions as a device capable of accompanying with a user (target) H while moving to an appropriate position to the user H in front of the user H.
As shown in Fig. 1, the moving body 1 mainly includes a substantially cylindrical outer case 2, a control unit 10 provided in the outer case 2 and controlling each part of the moving body 1, a distance measurement sensor 16, and wheels 17. The distance measurement sensor 16 is a device arranged on an upper part of the outer case 2 and detecting a distance (distance measurement) between the distance measurement sensor 16 and an object by irradiating laser light in all directions (360°). The distance measurement sensor 16 transmits a distance to the object detected at each arbitrary angle to the control unit 10 in association with the angle. Further, the distance measurement sensor 16 is configured to be movable in the vertical direction and the position of the distance measurement sensor 16 in the vertical direction is appropriately set in advance so that the laser light from the distance measurement sensor 16 is irradiated in advance to the periphery of the shoulder of the user H. Hereinafter, the distance and the angle detected by the distance measurement sensor 16 are referred to as "distance measurement data".
The wheels 17 are provided at both left and right ends of the bottom part of the outer case 2. A motor (not shown) is connected to each of the left and right wheels 17, and the moving body 1 is moved by driving the motors based on a control signal from a drive unit 18 (see Fig.2) described later. Forward movement and backward movement of the moving body 1 are conducted by normally and reversely rotating the left and right motors with the same output and change of movement direction of the moving body 1 is conducted by differentially rotating the motors. That is, the moving body 1 can move forward and backward directions which are the orthogonal direction in which the wheels 17 are arranged. On the other hand, since the moving body 1 cannot move directly in left and right directions, the moving body 1 moves through the wheels 17 and the drive unit 18 having non-holonomic restraint condition.

Next, with reference to Fig. 2, an electrical configuration of the moving body 1 will be described. Fig. 2 is a block diagram indicating an electric configuration of the moving body 1. The moving body 1 includes the control unit 10 having a CPU 11, a flash ROM 12 and a RAM 13 which are respectively connected to an input/output port 15 through a bus line 14. The distance measurement sensor 16 and the drive unit 18 are further connected to the input/output port 15.

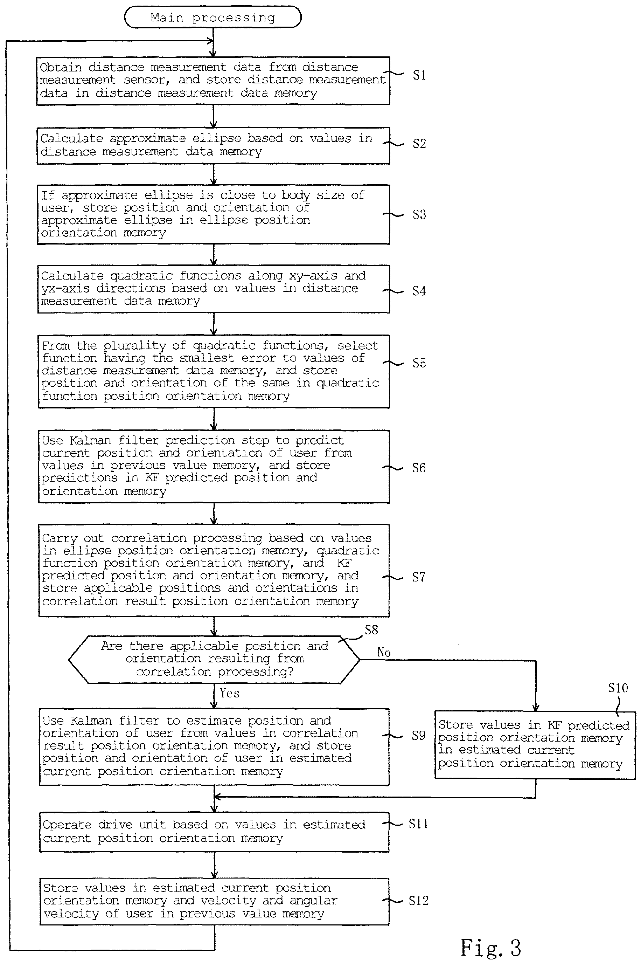

The CPU 11 is an arithmetic device for controlling the respective sections mutually connected with the bus line 14. A control program 12a is stored in the flash ROM 12 as a non-volatile rewritable memory device for storing the program executed by the CPU 11 and data of fixed values . Upon execution of the control program 12a by the CPU 11, a main processing shown in Fig. 3 is executed.

The RAM 13 is a memory for storing rewritably various work data and flags and the like in execution of the control program 12a by the CPU 11, and includes a distance measurement data memory 13a in which distance measurement data MP measured by the distance measurement sensor 16 are stored, an ellipse position orientation memory 13b, a quadratic function position orientation memory 13c, a Kalman filter predicted position orientation memory 13d (hereinafter, abbreviated as "KF predicted position orientation memory 13d"), a correlation result position orientation memory 13e, an estimated current position orientation memory 13f, and a previous value memory 13g.

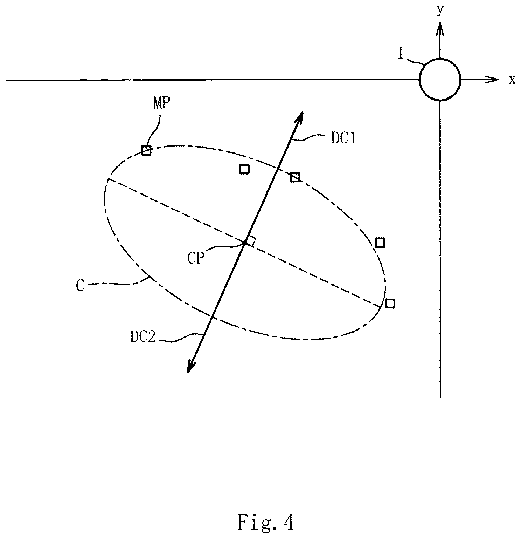

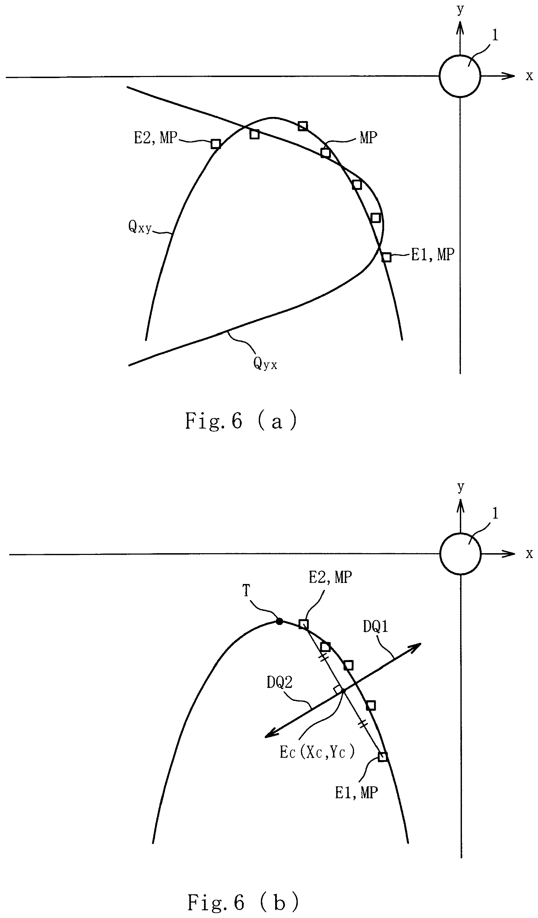

The ellipse position orientation memory 13b is a memory for storing position and orientation of the user H estimated from approximate ellipse C (see Fig. 4) which is approximated by the distance measurement data MP in the distance measurement data memory 13a. The quadratic function position orientation memory 13c is a memory for storing position and orientation of the user H estimated from quadratic function Qxy or Qyx (see Figs. 6) approximated by the distance measurement data MP in the distance measurement data memory 13a.

The KF predicted position orientation memory 13d is a memory for storing current position and orientation of the user H estimated based on Kalman filter prediction step (Formula 9) from a value of the previous value memory 13g mentioned later. The correlation result position orientation memory 13e is a memory for storing position and orientation of the user H estimated to be most likely of the user H among a plurality of positions and orientations of the user H stored in the ellipse position orientation memory 13b and the quadratic function position orientation memory 13c.

The estimated current position orientation memory 13f is a memory for storing position and orientation of the user H estimated by the Kalman filter based on the value of the correlation result position orientation memory 13e. The previous value memory 13g is a memory for storing the value of the estimated current position orientation memory 13f and the estimated velocity and angular velocity of the user H.

The drive unit 18 is a device to move and operate the moving body 1, and is constituted from the wheels 17 (see Fig. 1), the motor (not shown) serving as a drive source of the wheels 17, and the like. When a control signal is input from the control unit 10 to the drive unit 18, the motor rotates based on the input control signal, and the wheels 17 are driven by the rotation of the motor to operate the moving body 1.

Next, with reference to Figs. 3 to 7, the main processing executed by the CPU 11 of the moving body 1 will be described. Fig. 3 is a flowchart of the main processing of the moving body 1. The main processing is executed immediately after the moving body 1 is powered on. In the main processing, first, the distance measurement data MP obtained from the distance measurement sensor 16 are stored in the distance measurement data memory 13a (S1). After S1, an approximate ellipse C of the user H is calculated based on the distance measurement data MP stored in the distance measurement data memory 13a (S2) . With reference to Fig. 2, the calculation of the approximate ellipse C of the user H will be described.

Fig. 4 is a view indicating calculation of the approximate ellipse C of the user H. In Fig. 4, the distance measurement data MP of the user H obtained from the distance measurement sensor 16 are indicated as not color-filled squares. One approximate ellipse C is calculated by least squares method and the like based on the distance measurement data MP. In the present embodiment, a center CP of the approximate ellipse C is defined as a "position of the user H" and orientations DC1 and DC2 of short axis in the approximate ellipse C are defined as an "orientation of the user H". The two orientations DC1 and DC2 are calculated as the orientation of the user H because the approximate ellipse C cannot distinguish which direction (front or back) the user H faces. Which orientation DC1, DC2 is finally defined as an orientation of the user H is determined in the processing of S7 described later.

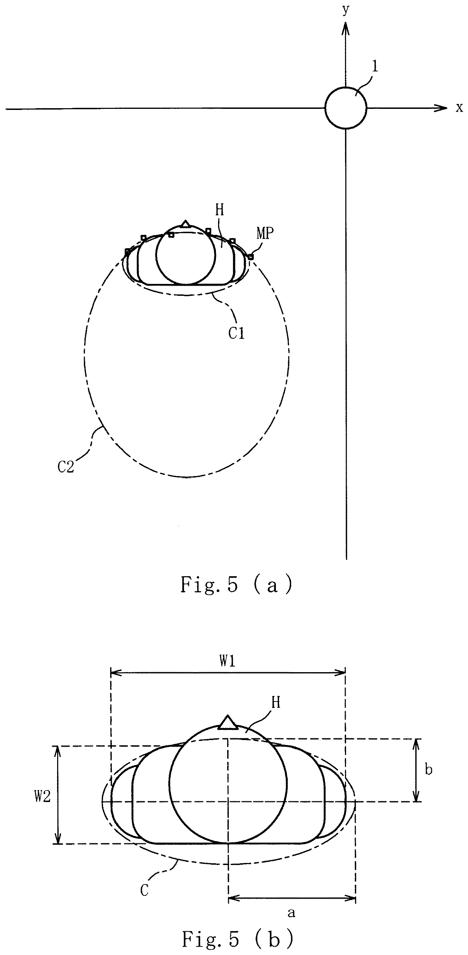

Referring back to Fig. 3, after the processing of S2, when the calculated approximate ellipse C is close to the size of the body of the user H, the position and orientation of the user H in the approximate ellipse C are stored in the ellipse position orientation memory 13b (S3). In the processing of S2, there are cases where the calculated approximate ellipse C fits the body size of the user H, deviates from the body size of the user H, or the like, due to instantaneous variations of the distance measurement data MP, fluctuation due to the distance measurement error of the distance measurement data MP, or the like. Therefore, in the processing of S3, it is determined whether or not the calculated approximate ellipse C is close to the body size of the user H, and when the approximate ellipse C is close to the body size of the user H, the position and orientation of the user H are calculated from the approximate ellipse C. The selection of the approximate ellipse C in the processing of S3 will be described with reference to Figs. 5.

Fig. 5(a) is a view indicating the case where the approximate ellipses C having different sizes are calculated due to instantaneous variations in the distance measurement data MP and Fig. 5(b) shows the shoulder width W1 and thickness W2 of the body of the user H and the long and short axes of the approximate ellipse C. Although one approximate ellipse C is calculated from the distance measurement data MP by the processing of S2 in Fig.3, due to instantaneous variations of the distance measurement data MP, as shown in Fig. 5(a), there are cases where the approximate ellipse C1 close to the body size of the user H is calculated and where the approximate ellipse C2 having different size from the approximate ellipse C1 is calculated. Especially, the approximate ellipse C2 is approximated by a larger circumference than a perimeter of the body around the shoulder of the user H. With such an approximate ellipse C2, the position and orientation of the user H cannot be accurately calculated.

Therefore, in the processing of S3 shown in Fig. 3, it is determined whether or not the calculated approximate ellipse C is close to the outer circumference around the shoulder of the user H based on the long axis a and the short axis b of the approximate ellipse C, the standard shoulder width W1 around the shoulder of the user H, and the thickness W2 as shown in Fig. 5(b). Specifically, the approximate ellipse C which meets the following conditions of Formula 1, is determined to be close to the body size of user H.

$$\frac{W1 - 2a}{W1} \leq 0.1 \ and \ \frac{W2 - 2b}{W2} \leq 0.1 \ \cdot \ \cdot \ \cdot \ (\text{Formula 1})$$

In the present embodiment, "0.6 m" is exemplified as the shoulder width W1 and "0.3 m" is exemplified as the thickness W2. That is, in a case where a double length of the long axis a of the approximate ellipse C lies within $\pm 10\%$ of the shoulder width W1 of the user H and a double length of the short axis b lies within $\pm 10\%$ of the thickness W2 of the user H, the approximate ellipse C is determined to be close to the size of the user H. In this manner, in a case where the approximate ellipse C is determined to be close to the body size of the user H, the center CP and orientations DC1, DC2 of the approximate ellipse C are stored in the ellipse position orientation memory 13b.

Referring back to Fig. 3, after the processing of S3, the quadratic function Qxy on the basis of xy coordinate system and the quadratic function Qyx on the basis of yx coordinate system are respectively calculated based on the distance measurement data MP stored in the distance measurement data memory (S4). Here, with reference to Fig. 6(a), calculation of the quadratic functions Qxy, Qyx will be described.

Fig. 6 (a) is a schematic view indicating calculation of two kinds of quadratic functions Qxy, Qyx. As shown in Fig. 6(a), the quadratic function Qxy approximated by quadratic function in the xy coordinate system and the quadratic function Qyx approximated by quadratic function in the yz coordinate system are calculated based on the distance measurement data MP. The quadratic function Qxy is calculated based on the following Formula 2 and the quadratic function Qyx is calculated based on the following Formula 3.

$$y = a_1 x^2 + b_1 x + c_1 \ \cdot \ \cdot \ \cdot \ (\text{Formula 2})$$

$$x = a_2 y^2 + b_2 y + c_2 \ \cdot \ \cdot \ \cdot \ (\text{Formula 3})$$

In Formula 2, $a_1$, $b_1$ and $c_1$ are coefficients and these coefficients are determined based on the least squares method of Formula 2 and the distance measurement data MP. In Formula 3, $a_2$, $b_2$ and $c_2$ are also coefficients and these coefficients are determined based on the least squares method of Formula 3 and the distance measurement data MP. That is, in the present embodiment, an axis line of the quadratic function Qxy has a shape upright along the x-axis and an axis line of the quadratic function Qyx is parallel to a shape upright along the y-axis.

Since the distance measurement sensor 16 obtains the distance to the user H by irradiating laser light in all directions, a part of the body of the user H is obtained as the distance measurement data MP of the user H. That is, the distance measurement data MP obtained from the distance measurement sensor 16 is biased in its distribution. Further, as shown in Fig. 6(a), the quadratic function Qxy in the xy coordinate system has an upward (or downward) convex shape and the quadratic function Qyx in the yx coordinate system has a leftward (or rightward) convex shape.

That is, since the quadratic function Qxy and the quadratic function Qyx have different shapes, the distribution of the distance measurement data MP that fits the quadratic function Qxy and the distribution of the distance measurement data MP that fits the quadratic function Qyx may exist depending on the distribution of the distance measurement data MP. In the present embodiment, by calculating two quadratic functions Qxy and Qyx having different shapes from the distance measurement data MP, candidates of the quadratic function Q can be given that is more likely to fit the distribution of the distance measurement data MP.

Referring back to Fig. 3, after the processing of S4, among the quadratic functions Qxy and Qyx, the one having the smallest approximation error to the value of the distance measurement data memory 13a is selected and the position and orientation of the quadratic function Qxy or Qyx are stored in the quadratic function position orientation memory 13c (S5). Specifically, first, for each of the quadratic functions Qxy and Qyx calculated in S4, the approximation error to the distance measurement data MP to be stored in the distance measurement data memory 13a is calculated. Among the quadratic functions Qxy and Qyx, the one having the smaller approximation error is selected as the quadratic function Q for calculating the position and orientation of the user H.

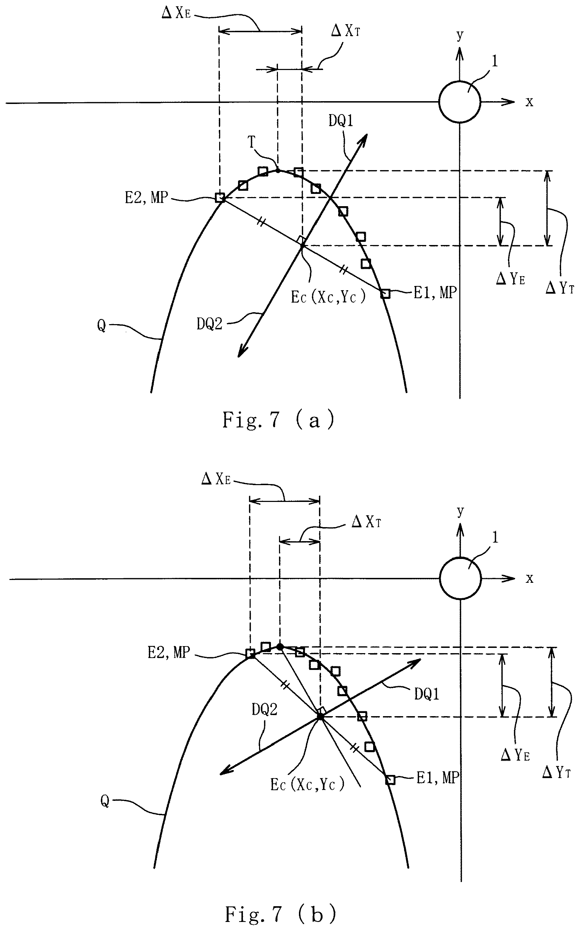

According to the selected quadratic function Q, the position and orientation of the user H are calculated. In the present embodiment, the position and orientation of the user H are calculated according to the positional relation between the vertex T of the quadratic function Q and the distance measurement data MP. A calculation method for position and orientation of the user H by the quadratic function Q will be described with reference to Figs. 6(b) and 7.

Fig. 6(b) is a view indicating the case where no vertex T of the quadratic function Q exists between distance measurement data MP at both ends. In Figs. 6(b) and 7, among the distance measurement data MP, the distance measurement data corresponding to one end side of the quadratic function is referred to as "cluster edge E1" and the distance measurement data MP corresponding to the other end side of the quadratic function Q is referred to as "cluster edge E2".

In Fig. 6(b), the vertex T of the quadratic function Q is located outside the cluster edge E1 and the cluster edge E2. That is, it is determined that the distance measurement data MP can measure a part of the body of the user H, specifically, the front surface (chest side) of the body or the back surface (back side) of the body, but cannot measure both shoulders well.

In the present embodiment, in a case where the vertex T of the quadratic function Q is located outside the cluster edge E1 and the cluster edge E2, the position and orientation of the user H are calculated based on the cluster edge E1 and the cluster edge E2 which are certainly measured. Specifically, a midpoint Ec between the cluster edges E1 and E2 is defined as the position of the user H and orientations DQ1, DQ2 perpendicular to the straight line connecting the cluster edges E1 and E2 is defined as the orientation of the user H. Specifically, a coordinate of the cluster edge E1 in the x-axis direction is defined as $X_{E1}$ and a coordinate of the cluster edge E1 in the y-axis direction is defined as $Y_{E1}$, and a coordinate of the cluster edge E2 in the x-axis direction is defined as $X_{E2}$ and a coordinate of the cluster edge E2 in the y-axis direction is defined as $Y_{E2}$, an orientation of the user H DQ1 is calculated by Formula 4 and an orientation of the user H DQ2 is calculated by Formula 5.

$$DQ1 = \tan^{-1}\left(\frac{Y_{E2} - Y_{E1}}{X_{E2} - X_{E1}}\right) + \frac{\pi}{2} \cdot \cdot \cdot \text{(Formula 4)}$$

$$DQ2 = \tan^{-1}\left(\frac{Y_{E2} - Y_{E1}}{X_{E2} - X_{E1}}\right) - \frac{\pi}{2} \cdot \cdot \cdot \text{(Formula 5)}$$

Thus, even in a case where only a part (front or back) of the body of the user H is measured as the distance measurement data MP, the position and orientation of the user H are calculated based on the cluster edge E1 and the cluster edge E2 which are certainly measured, therefore an error in the position and orientation of the user H can be minimized. Two orientations DQ1 and DQ2 are calculated as the orientation of the user H because the quadratic function Q cannot distinguish which direction (front or back) the user H faces, as is the case for the approximate ellipse C. Which of the orientations DQ1, DQ2 is finally defined as the orientation of the user H is determined in the processing of S7 described later.

Next, with reference to Figs. 7, the case where the vertex T of the quadratic function Q exists between the cluster edges E1 and E2 will be described. In a case where the vertex T of the quadratic function Q exists between the cluster edges E1 and E2, a calculation method for position and orientation of the user H differs depending on the cases where both the cluster edges E1 and E2 are distant from the vertex T (Fig. 7(a)) or where any one of the cluster edges E1 and E2 is close to the vertex T (Fig. 7(b)).

Fig. 7(a) is a view indicating the case where the vertex T of the quadratic function Q exists between the cluster edges E1 and E2, and the cluster edge E2 exists outside the vertex T of the quadratic function Q and is distant from the vertex T, and Fig. 7(b) is a view indicating the case where the vertex T of the quadratic function Q exists between the cluster edges E1 and E2, and the cluster edge E2 exists outside the vertex T of the quadratic function Q and is close to the vertex T. Although the case where the cluster edge E1 is sufficiently distant from the vertex T and the cluster edge E2 is distant from the vertex T and the case where the cluster edge E1 is distant from the vertex T and the cluster edge E2 is close to the vertex T will be described below, as a matter of course, the same applies to the case where the cluster edge E2 is sufficiently distant from the vertex T and the cluster edge E1 is distant from the vertex T or is close to the vertex T.

In a case where the vertex T exists between the cluster edges E1 and E2, first, a distance relation between the cluster edge E2 and the vertex T is determined. Specifically, as shown in Figs. 7(a) and 7(b), the positional relation between the cluster edge E2 and the vertex T is determined based on the distance between the midpoint Ec and the vertex T and the distance between the midpoint Ec and the cluster edge E2. The distance between the midpoint Ec and the vertex T in the x-axis direction is defined as $\Delta X_T$ and the distance between the midpoint Ec and the vertex T in y-axis direction is defined as $\Delta Y_T$, the distance between the midpoint Ec and the cluster edge E2 in the x-axis direction is defined as $\Delta X_E$, the distance between the midpoint Ec and the cluster edge E2 in the y-axis direction is defined as $\Delta Y_E$, and when the following Formula 6 is satisfied, it is determined that the cluster edge E2 and the vertex T are distant from each other.

$$0.9 < \frac{\Delta X_T + \Delta Y_T}{\Delta X_E + \Delta Y_E} \quad \cdot \ \cdot \ \cdot \ (\text{Formula 6})$$

That is, in the present embodiment, in a case where the distance between the midpoint Ec and the cluster edge E2 is larger than 0.9 times of the distance between the midpoint Ec and the vertex T, it is determined that the cluster edge E2 and the vertex T are distant from each other.

First, with reference to Fig. 7(a), a calculation method for position and orientation of the user H in a case where the cluster edge E2 and the vertex T are distant from each other will be described. As shown in Fig. 7(a), since the cluster edge E2 and the vertex T are distant from each other, many distance measurement data MP are measured not only between the cluster edge E1 and the vertex T but also between the vertex T and the cluster edge E2. Therefore, it can be determined that the front and back of the body of the user H including both shoulders are widely measured. In this case, the vicinity of the vertex T is estimated as a center position of the chest or back of the user H and the cluster edges E1 and E2 are estimated as positions in the vicinity of both shoulders.

Thus, in the present embodiment, in a case where the cluster edge E2 and the vertex T are distant from each other, based on the cluster edges E1 and E2 which are estimated as the positions of both shoulders, the position and orientation of the user H are calculated. Specifically, the midpoint Ec is defined as the position of the user H and the orientations DQ1, DQ2 perpendicular to the line connecting the cluster edges E1 and E2 are defined as the orientations of the user H. That is, the orientations of the user H are calculated from Formula 4 and Formula 5. As a result, the position and orientation of the user H are calculated based on the cluster edges E1 and E2 estimated as the positions of both shoulders, thus the position and orientation of the user H can be defined with greater accuracy.

Next, the calculation method of the position and orientation of the user H in a case where the cluster edge E2 and the vertex T are close, that is, where the above Formula 6 is not satisfied, will be described with reference to Fig. 7(b). As shown in Fig. 7(b), the cluster edge E2 exists outside the vertex T and is close to the vertex T. In this case, the position in the vicinity of the vertex T is estimated as the position in the vicinity of the left or right shoulder of the user H.

Since the cluster edge E2 is adjacent to the outside of the vertex T, the cluster edge E2 is located "behind" the vertex T when viewed from the distance measurement sensor 16 (moving body 1). That is, the vertex T becomes an obstruction (barrier) of laser light from the distance measurement sensor 16 and laser light does not reach the cluster edge E2, thus the cluster edge E2 is in a state that the distance measurement thereof cannot be made. As a result, since the whole of the corresponding left or the shoulder cannot be measured, the cluster edge E2 may be not accurately measured.

In the present embodiment, the orientations DQ1, DQ2 of the user H are calculated based on the vertex T in addition to the cluster edges E1 and E2. The vertex T is located within a range where the distance measurement data MP are accurately obtained, that is, the vertex T is the position defined as a left or right shoulder.

Specifically, in a case where the coordinate in the x-axis direction of the midpoint Ec is defined as $X_c$, the coordinate in the y-axis direction of the midpoint Ec is defined as $Y_c$, the coordinate in the x-axis direction of the vertex T is defined as $X_T$ and the coordinate in the y-axis direction of the vertex T is defined as $Y_T$, the orientation DQ1 of the user H is calculated by the following Formula 7 and the orientation DQ2 of the user H is calculated by the following Formula 8.

$$DQ1 = \tan^{-1}\left(\frac{Y_T - Y_C}{X_T - X_C}\right) + \frac{\pi}{2} \quad \cdot \ \cdot \ \cdot \ (\text{Formula 7})$$

$$DQ2 = \tan^{-1}\left(\frac{Y_T - Y_C}{X_T - X_C}\right) - \frac{\pi}{2} \quad \cdot \cdot \cdot \text{ (Formula 8)}$$

That is, in a case where the cluster edge E2 and the vertex T are close, the orientations DQ1, DQ2 are calculated from the direction of a line perpendicular to the line connecting both the midpoint Ec and the vertex T. That is, the orientations DQ1, DQ2 are calculated by considering both the vertex T located in a range where the distance measurement data MP are accurately measured and being determined as the position of the left or right shoulder on the approximated quadratic function Q, and the cluster edge E2 which is actually measured by the distance measurement sensor 16 but may not be accurately measured due to the effect of the vicinity of the vertex T. As a result, error in the orientations DQ1, DQ2 can be reduced. The orientations DQ1, DQ2 calculated in the manner described above are stored as the orientation of the user H and the midpoint Ec is stored as the position of the user H in the quadratic function position orientation memory 13c.

Referring back to Fig. 3, after the processing of S5, the current position and orientation of the user H are predicted based on the Kalman filter prediction step from a value of a previous value memory 13g and stored in the KF predicted position orientation memory 13d (S6). In the previous value memory 13g are stored the current position, orientation, and velocity and angular velocity of the user H, which are finally estimated in the previous processing of S9 or S11 described later. When the previous state continues the predicted position and orientation of the user H are calculated.

Assuming that the position of the user H in the x-axis direction stored in the previous value memory 13g is $P_{x,k-1}$, the position of the user H in the y-axis direction is $P_{y,k-1}$, the orientation of the user H is $P_{\theta,k-1}$, the velocity of the user H in the x-axis direction is $V_{x,k-1}$, the velocity of the user H in the y-axis direction is $V_{y,k-1}$, the angular velocity of the user H is $V_{\theta,k-1}$, the elapsed time from the previous processing of S9 or S11 is $\Delta_t$, and the system noise component of the user H due to the acceleration disturbance and the like are $n_{xs}$, $n_{ys}$, $n_{\theta s}$, the predicted position of the user H in the x-axis direction $P_{xp,k}$, the position of the user H in the y-axis direction $P_{yp,k}$, the orientation of the user H $P_{\theta p,k}$, the velocity of the user H in the x-axis direction $V_{xp,k}$, the velocity of the user H in the y-axis direction $V_{yp,k}$, the angular velocity of the user H $V_{\theta p,k}$ are calculated by Formula 9 which is publicly known as Kalman filter prediction step.

$$\begin{bmatrix} P_{xp,k} \\ P_{yp,k} \\ P_{\theta p,k} \\ V_{xp,k} \\ V_{yp,k} \\ V_{\theta p,k} \end{bmatrix} = \begin{bmatrix} 1 & 0 & 0 & \Delta t & 0 & 0 \\ 0 & 1 & 0 & 0 & \Delta t & 0 \\ 0 & 0 & 1 & 0 & 0 & \Delta t \\ 0 & 0 & 0 & 1 & 0 & 0 \\ 0 & 0 & 0 & 0 & 1 & 0 \\ 0 & 0 & 0 & 0 & 0 & 1 \end{bmatrix} \begin{bmatrix} P_{x,k-1} \\ P_{y,k-1} \\ P_{\theta,k-1} \\ V_{x,k-1} \\ V_{y,k-1} \\ V_{\theta,k-1} \end{bmatrix} + \begin{bmatrix} \Delta t^2 & 0 & 0 \\ 0 & \Delta t^2 & 0 \\ 0 & 0 & \Delta t^2 \\ \Delta t & 0 & 0 \\ 0 & \Delta t & 0 \\ 0 & 0 & \Delta t \end{bmatrix} \begin{bmatrix} n_{xs} \\ n_{ys} \\ n_{\theta s} \end{bmatrix} \quad \cdot \cdot \cdot \text{ (Formula 9)}$$

The position of the user H in the x-axis direction $P_{xp,k}$, the position of the user H in the y-axis direction $P_{yp,k}$, the orientation of the user H $P_{\theta p,k}$, the velocity of the user H in the x-axis direction $V_{xp,k}$, the velocity of the user H in the y-axis direction $V_{yp,k}$, the angular velocity of the user H $V_{\theta p,k}$, which are predicted by Formula 9, are stored in the KF predicted position orientation memory 13d.

After the processing of S6, a correlation processing is conducted based on the position and orientation of the user H stored in the ellipse position orientation memory 13b, the quadratic function position orientation memory 13c, and the KF predicted position orientation memory 13d, and the corresponding position and orientation of the user H are stored in the correlation result position orientation memory 13e (S7).

Specifically, first, the position and orientation of the user H stored in the ellipse position orientation memory 13b and the quadratic function position orientation memory 13c are narrowed down by a "gate" based on the previous value stored in the KF predicted position orientation memory 13d. This eliminates the position and orientation of the user H of the ellipse position orientation memory 13b and the quadratic function position orientation memory 13c that differ significantly from the position and orientation of the user H on previous values.

Further, among the positions and orientations of the user H narrowed down by the gate, those estimated to be the most likely position and orientation of the user H are selected by the nearest neighbor algorithm and stored in the correlation result position orientation memory 13e. When at least one of the position and orientation of the user H is not selected by the narrowing-down by the gate and the nearest neighbor algorithm, a value indicating that the position and orientation of the user H are not selected is stored in the correlation result position orientation memory 13e. Since the gate and the nearest neighbor algorithm are well-known techniques, a detailed explanation thereof will be omitted.

Among the positions and orientations of the user H calculated from the approximate ellipse C and the quadratic function Q, those estimated to be most likely of the user H are selected by the narrowing-down by the gate and the nearest neighbor algorithm.

After the processing of S7, it is checked whether the position and orientation of the user H are stored in the correlation result position orientation memory 13e (S8). If the position and orientation of the user H are stored (S8: Yes)), the current position and orientation of the user H are estimated from the value of the correlation result position orientation memory 13e by the known Kalman filter and stored in the estimated current position orientation memory 13f (S9). Specifically, in the values stored in the correlation result position orientation memory 13e, assuming that the position of the user H in the x-axis direction is $P_{xc}$, the position of the user H in the y-axis direction is $P_{yc}$, the orientation of the user H is $P_{\theta c}$, the velocity of the user H in the x-axis direction is $V_{xc}$, the velocity in the y-axis direction is $V_{yc}$, the angular velocity of the user H is $V_\theta c$, and observation error component due to a detection error of the distance measurement sensor 16 and a likelihood function and the like due to a movement of the user H are $n_{xp}$, $n_{yp}$, $n_{\theta p}$, the position of the user H in the x-axis direction $P_{x,k}$, the position of the user H in the y-axis direction $P_{y,k}$ and the orientation of the user H $P_{\theta,k}$ are calculated by Formula 10.

$$\begin{bmatrix} P_{x,k} \\ P_{y,k} \\ P_{\theta,k} \end{bmatrix} = \begin{bmatrix} 100000 \\ 010000 \\ 001000 \end{bmatrix} \begin{bmatrix} P_{xc} \\ P_{yc} \\ P_{\theta c} \\ V_{xc} \\ V_{yc} \\ V_{\theta c} \end{bmatrix} + \begin{bmatrix} n_{xp} \\ n_{yp} \\ n_{\theta p} \end{bmatrix} \cdots \text{(Formula 10)}$$

The velocity $V_{xc}$ of the user H in the x-axis direction is calculated based on the position of the user H in the x-axis direction stored in the previous value memory 13g and the position of the user H in the x-axis direction stored in the correlation result position orientation memory 13e. Similarly, the velocity $V_{yc}$ of the user H in the y-axis direction is calculated based on the position of the user H in the y-axis direction of the previous value memory 13g and the position of the user H in the y-axis direction of the correlation result position orientation memory 13e, and the angular velocity $V_{\theta c}$ of the user H is calculated based on the orientation of the user H of the previous value memory 13g and the orientation of the user H of the correlation result position orientation memory 13e.

Since the position and orientation of the user H, which are estimated to be most likely of the user H, stored in the correlation result position orientation memory 13e in the processing of S7 includes observation error components, i.e., an error that can actually occur, such as a detection error of the distance measurement sensor 16 and a movement of the user H, the position and orientation of the user H, in which the error with respect to the position and orientation of the user H that is actually observed, is small, can be estimated.

On the other hand, if the position and orientation of the user H are not stored in the correlation result position orientation memory 13e (S8: No), that is, if the value indicating that the position and orientation of the user H is not selected in the processing of S7 is stored in the correlation result position orientation memory 13e, the value of the KF predicted position orientation memory 13d is stored in the estimated current position orientation memory 13f (S10). That is, in the processing of S7, even when it is determined that the position and orientation of the user H calculated in the processing of S2 to S5 are not likely to be of the user H, the current position and orientation of the user H based on the value of the previous value memory 13g are stored in the estimated current position orientation memory 13f, although the predicted values. As a result, a situation in which the position and orientation of the user H are not updated can be prevented.

After the processing of S9 and S10, the control signal based on the position and orientation of the user H of the estimated current position orientation memory 13f is output to the drive unit 18 to operate the drive unit 18 (S11). As a result, the moving body 1 is moved and operated based on the estimated position and orientation of the user H.

After the processing of S12, the position and orientation of the user H stored in the estimated current position orientation memory 13f, the velocity of the user H, and the angular velocity of the user H are stored in the previous value memory 13g (S12). Specifically, first, the velocity and angular velocity of the user H are calculated based on the position and orientation of the user H of the estimated current position and orientation memory 13f and the position and orientation of the user H stored in the previous value memory 13g, and after these velocity and angular velocity of the user H are stored in the previous value memory 13g, the velocity and angular velocity of the user H in the estimated current position orientation memory 13f are stored. After the processing of S12, subsequent processing after S1 are repeated.

As described in the above, according to the moving body 1 in the present embodiment, based on the measured distance measurement data MP obtained by the distance measurement sensor 16, the approximate ellipse C, the quadratic functions Qxy in the xy coordinate system, and the quadratic functions Qyx in the yx coordinate system are calculated, and the position and orientation of the user H in each case are calculated. Among calculated positions and orientations of the user H, the position and orientation of the user H which are estimated to be most likely of the user H are selected by the gate and the nearest neighbor algorithm, and the current position and orientation of the user H are estimated from the selected position and orientation of the user H.

The positional relation between the moving body 1 and the user H changes variously every moment. Thus, a plurality of shapes such as the approximate ellipse C and a plurality of approximate curves in a plurality of the coordinate systems such as the quadratic functions Qxy, Qyx are calculated from the distance measurement data MP, and if the approximate curve based on one shape or coordinate system does not fit the user H well, the position and orientation of the user H are estimated based on the more fitting approximate curve on the basis of the other shape or coordinate system. Thereby, even if the positional relation between the distance measurement sensor 16 and the user H variously changes, the position and orientation of the user H can be detected.

Although the present invention has been described based on embodiments, the present invention is not limited to the above-described embodiments in any way, and it can be easily understood that various improvements and modifications are possible within the spirit of the present invention.

In the above embodiments, the case where two types of quadratic function, the quadratic function Qxy in the xy coordinate system and the quadratic function Qyx in the yx coordinate system, are defined as the quadratic function calculated from the distance measurement data MP has been described. However, the present invention is not necessarily limited thereto. The quadratic function in the xz coordinate system or yz coordinate system may be calculated and the quadratic function Q in the other coordinate system may be calculated.

In the above embodiments, the case where the distance measurement data MP is approximated by quadratic function has been described. However, the present invention is not necessarily limited thereto. The distance measurement data MP may be approximated by polynomial function with degree 3 or more such as cubic function or quartic function.

In the above embodiments, the case where the quadratic function Qxy has a shape upright along the x-axis and an axis line of the quadratic function Qyx has a shape upright along the y-axis has been described. However, the present invention is not necessarily limited thereto. The quadratic function Qxy, Qyx may be a shape tilting to x-axis or y-axis side.

In the above embodiments, the case where the body around the shoulder is measured by the distance measurement sensor 16 has been described. However, the present invention is not necessarily limited thereto. As long as the body of the user H is measured, around other parts such as the abdomen and waist may be measured.

In the above embodiments, the case where the position and orientation of the user H are estimated based on the approximate ellipse C has been described. However, the present invention is not necessarily limited thereto. The position and orientation of the user H may be estimated based on only quadratic function Q and may be estimated based on only the approximate ellipse C.

In the above embodiment, the case where the long axis a and the short axis b of the approximate ellipse C are approximated to the shoulder width W1 and the thickness W2 of the user H, the center CP of the approximate ellipse C and the orientations DC1, DC2 are stored in the ellipse position orientation memory 13b has been described. However, the present invention is not necessarily limited thereto. In a case where the circumference of the approximate ellipse C is approximated to the perimeter length of around the shoulder of the user H, the center CP of the approximate ellipse C and the orientations DC1, DC2 may be stored in the ellipse position orientation memory 13b, and in a case where the area of the approximate ellipse C is approximated to the sectional area of around the shoulder of the user H, the center CP of the approximate ellipse C and the orientations DC1, DC2 may be stored in the ellipse position orientation memory 13b.

In the above embodiments, the case where the cluster edges E1, E2 in the quadratic function Q are defined as the distance measurement data MP at the both ends of the distance measurement data MP has been described. However, the present invention is not necessarily limited thereto. Among the distance measurement data MP on the quadratic function Q, the point which is approximated to the distance measurement data MP at one end may be defined as the cluster edge E1 and the point which is approximated to the distance measurement data MP at the other end may be defined as the cluster edge E2.

In the above embodiment, the case where the position of the user H in the approximate ellipse C is made as the center CP of the approximate ellipse and the position of the user H in the quadratic functions Qxy, Qyx are defined as the midpoint Ec between the cluster edges E1 and E2 has been described. However, the present invention is not necessarily limited thereto. The position of the user H, in any of the approximate ellipse C or the quadratic function Q, may be defined either as the center CP of the approximate ellipse C or as the midpoint Ec between the cluster edges E1 and E2. The position of the user H calculated by other method such as the least squares method may be applied.

In the above embodiment, the case where the orientations DQ1, DQ2 are calculated from the direction of a line perpendicular to the line connecting the midpoint Ec and the vertex T, when the vertex T exists between the cluster edges E1 and E2 and the cluster edge E2 is close to the vertex T has been described. However, the present invention is not necessarily limited thereto. In this case, the orientations DQ1, DQ2 may be calculated from the direction of a line perpendicular to the line connecting the cluster edges E1 and E2 as is the case where the cluster edge E2 and the vertex T are distant.

The numerical values listed in the above embodiments are merely examples, and matter of course, it is possible to adopt other numerical values.

[Reference Signs List]

| | |
|---|---|
| 10 | control unit (body orientation estimation device) |
| 12a | control program (body orientation estimation program) |
| H | user (target) |
| 16 | distance measurement sensor |
| MP | distance measurement data |
| Q, Qxy, Qyx | quadratic function |
| C, C1, C2 | approximate ellipse |
| E1, E2 | cluster edge |
| S2 | ellipse calculation unit |
| S3 | orientation estimation unit, orientation estimation function |
| S4 | quadratic function calculation unit, quadratic function calculation function |
| S5 | quadratic function selection unit, quadratic function selection function, orientation estimation unit, orientation estimation function, first orientation estimation unit, second orientation estimation unit |
| S7 to S10 | orientation estimation unit, orientation estimation function |
| T | vertex |

**Claims**

1. A body orientation estimation device comprising:

   a distance measurement unit for measuring a target;
   a quadratic function calculation unit for calculating quadratic functions approximated based on a plurality of distance measurement data measured by the distance measurement unit based on a plurality of coordinate systems;
   a quadratic function selection unit for selecting the quadratic function having the smallest approximation error to the plurality of distance measurement data among the quadratic functions calculated by the quadratic function calculation unit; and
   an orientation estimation unit for estimating an orientation of the target based on the quadratic function selected by the quadratic function selection unit.

2. The body orientation estimation device according to claim 1,
   wherein among the distance measurement data used for calculating the quadratic function selected by the quadratic function selection unit, two points of the distance measurement data corresponding to one end on the quadratic function and the distance measurement data corresponding to the other end on the quadratic function are defined as cluster edges or among points on the quadratic function selected by the quadratic function selection unit, two points of a point approximated to the distance measurement data at one end and a point approximated to the distance measurement data at the other end are defined as cluster edges, and
   wherein the orientation estimation unit comprises a first orientation estimation unit which estimates a direction perpendicular to a line connecting the cluster edges as the orientation of the target.

3. The body orientation estimation device according to claim 2,
   wherein the orientation estimation unit estimates the orientation of the target by the first orientation estimation unit in a case where a vertex of the quadratic function selected by the quadratic function selection unit does not exist between the cluster edges.

4. The body orientation estimation device according to claim 2 or 3,
   wherein the orientation estimation unit estimates the orientation of the target by the first orientation estimation unit in a case where a vertex of the quadratic function selected by the quadratic function selection unit exists between the cluster edges and a first predetermined condition is satisfied.

5. The body orientation estimation device according to any one of claims 1 to 4,
   wherein among the distance measurement data used for calculating the quadratic function selected by the quadratic function selection unit, two points of the distance measurement data corresponding to one end and the other end on the quadratic function are defined as cluster edges or among the points on the quadratic function selected by the quadratic function selection unit, a point approximated to the distance measurement data at one end and a point approximated to the distance measurement data of the other end are defined as cluster edges, and
   wherein the orientation estimation unit comprises a second orientation estimation unit which estimates a direction perpendicular to a line connecting a midpoint of the cluster edges and a vertex of the quadratic function selected by the quadratic function selection unit as the orientation of the target.

6. The body orientation estimation device according to claim 5,
   wherein the orientation estimation unit estimates the orientation of the target by the second orientation estimation unit in a case where the vertex of the quadratic function selected by the quadratic function selection unit exists between the cluster edges and a second predetermined condition is satisfied.

7. The body orientation estimation device according to any one of claims 1 to 6,
   wherein the quadratic function calculation unit calculates the quadratic function approximated on the basis of a plurality of distance measurement data based on two at least coordinate systems respectively of xy coordinate system and yx coordinate system.

8. The body orientation estimation device according to any one of claims 1 to 7, further comprising:

   an ellipse calculation unit for calculating an approximate ellipse based on a plurality of distance measurement data measured by the distance measurement unit;
   wherein the orientation estimation unit estimates the orientation of the target based on the ellipse calculated by the ellipse calculation unit or the quadratic function selected by the quadratic function selection unit.

9. The body orientation estimation device according to claim 8,
   wherein the orientation estimation unit estimates any of the orientations among the orientation of the target estimated based on the ellipse calculated by the ellipse calculation unit, the orientation of the target estimated based on the quadratic function selected by the quadratic function selection unit, and an estimation orientation this time of the target estimated based on an orientation of the target estimated previous time, as the orientation of the target by a correlation processing based on the estimation orientation this time of the target.

10. The body orientation estimation device according to any one of claims 1 to 9,
    wherein the orientation estimation unit further updates the estimated orientation of the target by Kalman filter and estimates the orientation after update as the orientation of the target.

11. A body orientation estimation program allows a computer to execute following functions of:

    a distance measurement obtainment function for obtaining distance measurement data measuring a target;
    a quadratic function calculation function for calculating quadratic functions approximated based on a plurality of distance measurement data obtained by the distance measurement obtainment function in a plurality of coordinate systems;
    a quadratic function selection function for selecting the quadratic function having the smallest approximation error to the distance measurement data among quadratic functions calculated by the quadratic function calculation function; and
    an orientation estimation function for estimating an orientation of the target based on the quadratic function selected by the quadratic function selection function.

Fig. 1

10

1

| 11 ~ | CPU |
| --- | --- |

| 12 ~ | FLASH ROM |
| --- | --- |
| 12a ··· | CONTROL PROGRAM |

| 13 ~ | RAM |
| --- | --- |
| 13a ··· | DISTANCE MEASUREMENT DATA MEMORY |
| 13b ··· | ELLIPSE POSITION ORIENTATION MEMORY |
| 13c ··· | QUADRATIC FUNCTION POSITION ORIENTATION MEMORY |
| 13d ··· | KF PREDICTED POSITION ORIENTATION MEMORY |
| 13e ··· | CORRELATION RESULT POSITION ORIENTATION MEMORY |
| 13f ··· | ESTIMATED CURRENT POSITION ORIENTATION MEMORY |
| 13g ··· | PREVIOUS VALUE MEMORY |

14

INPUT/OUTPUT PORT

15

| DISTANCE MEASUREMENT SENSOR | ~ 16 |
| --- | --- |

| DRIVE UNIT | ~ 18 (17) |
| --- | --- |

Fig. 2

14

```
                    ( Main processing )
                            │
                            ▼
┌──────────────────────────────────────────────┐
│ Obtain distance measurement data from distance│ ╮
│ measurement sensor, and store distance        │ ├─ S1
│ measurement data in distance measurement      │ ╯
│ data memory                                   │
└──────────────────────────────────────────────┘
                            │
                            ▼
┌──────────────────────────────────────────────┐
│ Calculate approximate ellipse based on values │ ╮─ S2
│ in distance measurement data memory           │ ╯
└──────────────────────────────────────────────┘
                            │
                            ▼
┌──────────────────────────────────────────────┐
│ If approximate ellipse is close to body size  │ ╮
│ of user, store position and orientation of    │ ├─ S3
│ approximate ellipse in ellipse position       │ ╯
│ orientation memory                            │
└──────────────────────────────────────────────┘
                            │
                            ▼
┌──────────────────────────────────────────────┐
│ Calculate quadratic functions along xy-axis   │ ╮
│ and yx-axis directions based on values in     │ ├─ S4
│ distance measurement data memory              │ ╯
└──────────────────────────────────────────────┘
                            │
                            ▼
┌──────────────────────────────────────────────┐
│ From the plurality of quadratic functions,    │ ╮
│ select function having the smallest error to  │ │
│ values of distance measurement data memory,   │ ├─ S5
│ and store position and orientation of the same│ │
│ in quadratic function position orientation    │ ╯
│ memory                                        │
└──────────────────────────────────────────────┘
                            │
                            ▼
┌──────────────────────────────────────────────┐
│ Use Kalman filter prediction step to predict  │ ╮
│ current position and orientation of user from │ │
│ values in previous value memory, and store    │ ├─ S6
│ predictions in KF predicted position and      │ │
│ orientation memory                            │ ╯
└──────────────────────────────────────────────┘
                            │
                            ▼
┌──────────────────────────────────────────────┐
│ Carry out correlation processing based on     │ ╮
│ values in ellipse position orientation memory,│ │
│ quadratic function position orientation       │ │
│ memory, and  KF predicted position and        │ ├─ S7
│ orientation memory, and store applicable      │ │
│ positions and orientations in correlation     │ │
│ result position orientation memory            │ ╯
└──────────────────────────────────────────────┘
                            │        S8
                            ▼       ╱
          ╱─────────────────────────╲
         ╱  Are there applicable      ╲      No
        ◄   position and orientation   ►────────────┐
         ╲  resulting from             ╱            │
          ╲ correlation processing?   ╱             │
            ╲─────────────────────────╱             │
                    │ Yes                           ▼     S10
                    ▼                      ┌──────────────────┐
┌──────────────────────────────────────┐  │ Store values in  │
│ Use Kalman filter to estimate position│  │ KF predicted     │
│ and orientation of user from values in│  │ position         │
│ correlation result position orientation├─ S9  orientation    │
│ memory, and store position and        │  │ memory in        │
│ orientation of user in estimated      │  │ estimated current│
│ current position orientation memory   │  │ position         │
└──────────────────────────────────────┘  │ orientation memory│
                    │                      └──────────────────┘
                    │◄───────────────────────────────┘
                    ▼
┌──────────────────────────────────────────────┐
│ Operate drive unit based on values in         │ ╮─ S11
│ estimated current position orientation memory │ ╯
└──────────────────────────────────────────────┘
                            │
                            ▼
┌──────────────────────────────────────────────┐
│ Store values in estimated current position    │ ╮
│ orientation memory and velocity and angular   │ ├─ S12
│ velocity of user in previous value memory     │ ╯
└──────────────────────────────────────────────┘
```

Fig. 3

Fig. 4

Fig.5（a）

Fig.5（b）

Fig.6 (a)

Fig.6 (b)

Fig. 7 (a)

Fig. 7 (b)

## INTERNATIONAL SEARCH REPORT

| International application No. |
| --- |
| PCT/JP2019/012299 |

**A. CLASSIFICATION OF SUBJECT MATTER**
Int.Cl.    G01B11/26(2006.01)i, G01B11/24(2006.01)i, G06T7/521(2017.01)i,
          G06T7/70(2017.01)i

According to International Patent Classification (IPC) or to both national classification and IPC

**B. FIELDS SEARCHED**

Minimum documentation searched (classification system followed by classification symbols)
Int.Cl. G01B11/26, G01B11/24, G06T7/521, G06T7/70

| Documentation searched other than minimum documentation to the extent that such documents are included in the fields searched | |
| --- | --- |
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2011-81634 A (SOHGO SECURITY SERVICES CO., LTD., THE UNIVERSITY OF TOKYO) 21 April 2011, entire text, all drawings (Family: none) | 1-11 |
| A | JP 2010-169521 A (NEC CORP.) 05 August 2010, entire text, all drawings (Family: none) | 1-11 |
| A | JP 2009-116871 A (PALO ALTO RESEARCH CENTER INCORPORATED) 28 May 2009, entire text, all drawings & US 2009/0116766 A1 | 1-11 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 14 June 2019 (14.06.2019) | 25 June 2019 (25.06.2019) |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2019/012299

C (Continuation).    DOCUMENTS CONSIDERED TO BE RELEVANT

| Category* | Citation of document, with indication, where appropriate, of the relevant passages | Relevant to claim No. |
|---|---|---|
| A | JP 9-322050 A (SONY CORP.) 12 December 1997, entire text, all drawings (Family: none) | 1-11 |
| A | JP 2008-257575 A (FUJITSU LTD.) 23 October 2008, entire text, all drawings (Family: none) | 1-11 |
| A | WO 2013/11644 A1 (PANASONIC CORP.) 24 January 2013, entire text, all drawings & US 2014/0140596 A1 | 1-11 |
| PA | WO 2018/180503 A1 (EQUOS RESEARCH CO., LTD.) 04 October 2018, entire text, all drawings & JP 2018-169333 A | 1-11 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016175509 A
- JP 2011081634 A
- JP 2010169521 A